# EUROPEAN PATENT SPECIFICATION

(11) **EP 1 633 204 B1**
(45) Date of publication and mention of the grant of the patent: **03.01.2007**
(21) Application number: 04740338.1
(22) Date of filing: 17.06.2004
(51) Int. Cl.: A23L 1/212, A23B 7/02

(54) **OLIVE POWDER**
OLIVENPULVER
POUDRE D'OLIVES

(30) Priority: 19.06.2003 GB 0314294
(43) Date of publication of application: 15.03.2006
(73) Proprietor: Natraceutical S.A., 46930 Valencia (ES)
(72) Inventor: ZUMBE, Albert, CH-1206 Geneva (CH)
(74) Representative: Marques Alos, Fernando
(86) International application number: PCT/EP2004/006930
(87) International publication number: WO 2004/110171

(56) References cited:
- EP-A- 0 718 397
- US-A- 5 801 127
- DATABASE WPI Section Ch, Week 200276 Derwent Publications Ltd., London, GB; Class D13, AN 2002-704714 XP002277178 & KR 2002 040 930 A (LEE S W) 31 May 2002 (2002-05-31) cited in the application
- BELITZ; GROSCH: "Food Chemistry" 1999, SPRINGER , BERLIN , XP002306996 page 104 - page 105

## Description

### Technical field of invention

### Background to the invention

The present invention relates to processes for producing olive powder. The powders are useful in comestibles for humans.

It is well accepted that the high monounsaturation of olive oil and the presence of other several constituents in the olive such as phenols and tocopherol, chlorophyll, pheophytin, sterols, squalene, aroma and flavour compounds and others exhibit a significant role in the health. Olive oil is a highly monounsaturated oil, is resistant to oxidation. Also the presence of tocopherols and other natural antioxidants prevent lipid oxidation within the body eliminating the formation of free radicals which may cause cell destruction. The aroma and flavor compounds of olive as well as the chlorophyll and pheophytin pigments, increase the stomach secretion and facilitate the absorption of the natural antioxidants, which furthermore protect the body tissues from oxidation. Epidemiological studies suggest that the high consumption of the monounsaturated olive oil in Mediterranean countries is related with the low rates of cardiovascular disease (CHD), breast cancer and with high life expectancy (Kiritsakis A. (1), 2003. Composition of olive oil and its nutritional and health effect. School of Food Technology and Nutrition, Technological Educational Institution of Thessaloniki, Greece; Assman G. and Wahrburg U., 2003. Effects on health of the secondary compounds of olive oil (1st and 2nd part). Institute of Arterosclerosis Research. Münster University, Germany.

The European Union produces about 74% of the total olive production worldwide, from which 49% are Spanish with a total of 2,150,000 Ha of cultivated surface. World's olives production has varied during the last ten years between 9 and 15 millions of tonnes. 90 to 95% of this production is used in the production of olive oil and olive-pomace oil.

Olives are mainly consumed as olive oil. They are also consumed directly as table olives and only a few more applications are known.

In the production of olive oil there is a great problem with the utilization of the by-products generated in the oil mill or almazara. The three-phase method of olive oil extraction, also known as "old method", includes the operations of milling and beating, pressing and centrifugation. In the pressing we obtain the orujo and in the centrifugation the alpechin or vegetation water, both of them as by-products. The two-phase method, known as "new method", includes the operations of milling, decanting, and centrifugation. In this case, we obtain alpeorujo in the decanter and the alpechin or vegetation water in the centrifugation, both of them as by-products (Improlive Project, 2000; Kiritsakis A. (2), 1991). EI aceite de oliva. Ed. A. Madrid. Spain.

The by-products of the olive oil extraction always have been considered a waste material, and only in the last years there have been developed certain applications such as animal feed, combustion material from the pits, and fungal compounds for treatment of plant diseases (Improlive Project, 2002. Improvement of treatments and validation of the liquid solid waste from the two-phase olive oil extraction. 2002. Europe. ISO 2291. 1980. 2nd ed.; Almirante P. and Montervino A., 1996, EP-A-0718397).

In US-A-5801127 a powder produced from olive oil by-products is used in oil-well drilling operations.

In KR-A-2002-040930 whole olives are crushed and mixed with com flour and starch, then lyophilised and ground to form a powder with nutritious properties.

### Description of the invention

It would be desirable to produce an olive powder suitable for human consumption. In particular it would be desirable to produce such a product from by-products of olive oil production.

According to the present invention there is provided a comestible olive powder of which at least 99% by weight has particle size less than 0,55 mm and an oil content of less than 20% by weight.

The powder of the invention has utility in producing comestible products, especially for human consumption. Two versions of the product are postulated for these uses.

The powder of the invention is produced in a novel process, starting from an aqueous olive paste. The process comprises the steps
subjecting the olive starting materials to a polyphenol oxidase (PPO) in activation step;
drying an olive paste having an oil content no more than 20% by weight of non-volatiles to remove water and provide a particulate intermediate; and
optionally dry comminuting the particulate intermediate having a water Content of less than 20% by weight in a mill whilst the material is maintained at a temperature less than 10°C, to form a powder.

The process may involve a step of sieving the particulate intermediate. In such a process it may or may not be necessary, to achieve the desired product particle size distribution, to subject the sieved intermediate to subsequent dry comminution.

As mentioned above, it is generally preferred for ease processing, for the comminution step to be carried out on a reduced oil material, such that the starting material for the comminution step has an oil content in the range 0.1 to 15% by weight preferably 5 to 15% based on total paste weight. It is also preferred that the starting material in the comminution step has a moisture content of less than 10% by weight based on total paste weight.

Three sources are useful for the aqueous olive paste in the process of this invention:

The first source is whole olive. There are three principal components in the fruit: the endocarpium (the stone centre or pit), mesocarpium (the flesh) and the epicarpium (the skin). The relationship between flesh/pit is 4:1 to 8:1 in the "oil" olives, and in the "table" olives the relation is 7:1 to 10:1. Olive typically contains as average: water 50%, oil 22%, carbohydrates 19.1%, fibre 5.8%, proteins 1.6% and ash 1.5%.

The second source is the orujo obtained in the three-phase olive oil extraction. The yield of orujo in the oil extraction is approximately 60 - 75%. Orujo typically contains as average: water 20-30%, oil 7-15%, carbohydrates 40-48%, fibre 12-15%, proteins 3-5% and ash 3-4%, by weight based on total orujo weight.

The third source is the alpeorujo obtained in the two-phase olive oil extraction. The yield of alpeorujo in the oil extraction is approximately 70 - 80%. The alpeorujo typically contains as average: water 60-75%, oil 5-8%, carbohydrates 20-25%, fibre 6-8%, proteins 1.5-2.5% and ash 1.5-2.3% by weight based on total alpeorujo weight. Traditional manufacturers of the two-phase oil mill are Pieralisi, Fethil, Alpha Laval, Oliomio, Westphalia, and others.

The olive paste may be prepared from the olive fruit as part of the process of the invention where the olive starting material is whole olive. The objective is to obtain an olive paste low in water and fat content avoiding the use of the traditional methods of the almazaras. The processes for starting with olive fruit are, briefly, cooking, drying, and pressing for oil removal.

The cooking operation can be used or not, this process is an optional operation depending upon the technology used in the drying and depending on whether an alternative PPO inactivation step is carried out. Cooking in the presence of moisture is essential for the denaturation of the proteins and, to some extent, for the coalescence of the oil droplets. Cooking temperatures and times would be between 40 to 250°C during 180 to 5 minutes respectively. Cooking can be done by mixing the olives with live steam or also with indirect steam, while thoroughly mixing the mass. After cooking, excess moisture is removed in order to avoid the formation of muddy emulsions in the press.

The methods for drying the olive can be sun dryer, rotatory dryer, vacuum dryer, pan dryer and tray dryers. Drying temperature and pressure would be between 40 to 250°C and 0 to 760 mmHg (up to 10⁵Pa gauge pressure). In the drying, the yield of semi-dry olive can be between 60 to 90% of the initial weight, being better between 65 to 75% of the initial weight, and the yield of the extracted water condensate can be between 40 to 10% of the initial weight, being better between 35 to 75% of the initial weight.

In the pressing basically two types of presses can be used, a batch press, based in the common hydraulic press, or a continuous press using an expeller press. The expeller consists of a screw (or worm), rotating inside a cylindrical cage (barrel). The material to be pressed is fed between the screw and the barrel and propelled by rotating the screw in a direction parallel to the axis. The configuration of the screw and its shaft is such that the material is progressively compressed as it moves on, towards the discharge end of the cylinder. The gradually increasing pressure releases the oil which flows out of the press through the slots provided on the periphery of the barrel, while the press cake continues to move in the direction of the shaft, towards a discharge gate installed in the other extremity of the machine.

At the end of the pressing it is obtained a "semi-dry and semi-defatted" olive paste, the yield of this by-product can be between 50 to 70% of the initial olive weight, and the level of olive oil obtained can be between 5 to 20%. This "semi-dry and semi-defatted" olive paste can be used as raw material in the process of the invention to form olive powder. If its fat content is still high, more than 5%, it can be defatted by solvent extraction or by critical CO₂ before obtaining the olive powder.

Orujo and alpeorujo may alternatively be useful as the olive paste. The processes of preparation include the operations of collection and separation by varieties, weighing and stabilizing. The temperature of these by-products when they exit from the almazara is between 25 to 40 °C and its microbiological content is very high, so they may need to be stabilized depending on the following processes and the products to be obtained. The additives that can be used for stabilizing the orujo or alpeorujo can be organic or inorganic acids (e.g. citric acid, malic acid, etc), salts (e.g. NaCl, etc), alcohols (e.g. ethanol, etc), other preservatives permitted by Codex Alimentarius (e.g: sodium metabisulphite, etc), and systems of refrigeration and/or freezing.

Whichever steps are used for the preparation of the paste, it is important that the oil content before the essential drying step is less than 20% based on non-volatiles, preferably less than 10% based on total paste weight, preferably less than 15% based on non-volatiles.

When many types of fruits and vegetables are bruised or injured, superficial surface browning occurs rapidly. Enzymatic browning requires four different components: oxygen, the polyphenol oxidase enzyme (PPO), copper, and polyphenols as substrate. To prevent browning at least one of these components must be removed. The total phenolic content in the olive fruit is approximately 0.04%. When the olive is crushed in the milling for the obtention of olive oil, the PPO and the olive polyphenols that normally are present in separated parts of the cells are mixed, thus starting the enzymatic browning. In the invention it is important to prevent or reduce the effect of the enzymatic browning. The darkening originated by the enzymatic reaction can be considered a bad quality parameter in the final products. The means for reducing the effect of inactivating PPO are:
a) Elimination of oxygen. Storing the paste in modified atmosphere with CO₂ or N₂ until its drying can be carried out.
b) Decrease of enzyme activity by changing the pH. Adding citric or ascorbic acid to the olive paste.
c) Use of a reducing agent. Adding sulphites or ascorbic acid to the olive paste.
d) Deactivation of enzymes by moderate heat. Blanching the olive paste. This blanching operation can be part of the process of drying. In the blanching the PPO is fully deactivated and the enzymatic browning will not occur again while the other three methods only modify the conditions thus avoiding PPO activity.

Oleuropein is the typical glycoside of the olive. Oleuropein is responsible of the bitter taste in the immature olives. As the season passes maturation diminishes the bitter taste of the fruit. At the beginning of the season the oleuropein content is very high (can reach 14% of the dry weight), and as ripening occurs oleuropein content decreases. That is the reason why the mature olives from the final season are more "sweet" and less bitter than those immature. The only alternative for reducing the bitterness in the olive consists in the hydrolysis of oleuropein. The by-products of hydrolysis are less bitter and have more antioxidant activity (e.g. hydroxytyrosol). Oleuropein hydrolysis can be achieved by acid hydrolysis (e.g. 1% citric acid), alkaline hydrolysis (e.g. 1-2% NaOH) and/or enzymatic hydrolysis. The enzymatic hydrolysis can be done using esterases, glycosidases, for instance specifically for instance glucosidases, both enzymes can hydrolyse the oleuropein because it is a phenolic compound having an ester linkage to a glucoside group. The hydrolysis of oleuropein can be carried out on the olive paste.

This process can be done in a bio-reactor prior to the drying step, or in the dryer itself before starting the drying step of the process of the invention.

Alternatively hydrolysis of oleuropein may be carried out starting with a particulate e.g. the small particle size powder. This operation will include additional steps mixing the particulate with water, modifying temperature and pH at optimal enzyme activity, bio-reaction period, drying, and, generally, milling.

Enzymes such as glycosidases, for this compound especially 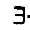 -glycosidases, such as 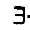 -glucosidases, are commercially available which cleave the glycoside to form an aglycone. Enzymes used by Briante, R *et al* may be used. Suitable esterases may be used to cleave the ester linkage of the oleuropein and/or the aglycone formed after activity of the glycosidase. The skilled person will be able to select reaction conditions, for instance of temperature, pH and concentration, as well as time, to achieve suitable levels of enzyme reaction. Usually enzymes are most active between 35°C and 45°C at pH's between 4 and 6.5. It may be possible to use thermo-stable enzymes e.g. recombinant glycosidases, for instance which may have optimum activity in the range 60°C to 70°C.

It is generally desirable for the process of the invention to include at least one step in which oil is removed. As described above, the preliminary series of steps by which whole olive fruit may be used to form an olive paste, may include a step of oil removal, following optional cooking and drying. The product may be subjected to further oil removal steps. Furthermore where the paste is orujo or alpeorujo the process may involve oil removal steps. Such steps may be carried out prior to the drying step which is essential in the invention, between the essential drying and dry comminuting steps or after the comminution step.

Where an oil removal step is carried out on olive paste, there are several suitable methods.

Solvent extraction is one of the most efficient and complete method of oil extraction. The oil can be separated from the paste by passing the solvent through the paste and evaporating the residual solvent after the extraction. In this method a mix of oil and essential oils is obtained.

Critical CO₂ extraction is another method of oil extraction. The paste is placed in a stainless steel tank and, as carbon dioxide is injected into the tank, pressure inside the tank increases. Under high pressure, the carbon dioxide tums into liquid and acts as solvent to extract oil from the paste.

The essential drying step of the process of the invention should be controlled so as to optimise the rate of evaporation of water, whilst avoiding deleterious effects on the olive material. The temperature should thus be raised to accelerate the drying, but should be kept below a desired maximum, to avoid adverse reactions of the organic materials. Preferably the temperature should be maintained in the drying step at less than 75°C. Other conditions, such as time, gas flow, agitation, and pressure should be adapted so as to achieve the desired levels of moisture content in the final product. Preferably the drying temperature is higher than ambient, eg above 20°C, more preferably in the range 40 to 60°C. The pressure in the drying step is up to atmospheric pressure, but is preferably reduced, for instance at a gauge pressure of below 10 kPa, preferably below 5 kPa. The drying may be carried out in tray dryers, pan dryers, rotary dryers, fluid bed dryers or the like.

The moisture content following the drying step should generally be below 20% by weight, more preferably less than 10% or even less than 5% by weight.

Prior to the drying or a subsequent comminution step, it may be desired to separate the materials, for instance to remove olive pits which have been present in the olive paste especially where this is orujo or alperujo. The pits may be removed by a sieving operation using a sieve with the appropriate aperture, such as one which removes particles having sizes more than 4mm, or more than 3mm, for instance more than 2mm. Where pits may have been pulverised during earlier steps in the process e.g. in the production of paste which is orujo or alpeorujo, it may be desirable to use even smaller apertures, for instance as low as 0.5mm, to remove all pit residues. Sifting may be carried out on the paste, which may save energy in the subsequent drying step. Alternatively it is the particulate material from the drying step which is dry sieved to remove pits and larger sized particulates.

The removed pits may be used for fuel, or in building materials, as such. Alternatively they may be processed, for instance by processes including comminution steps, to render them useful for end applications.

Alternatively, it may be unnecessary to remove pits or a residue thereof from the particulate intermediate material. Thus the material to be subjected to a comminution step may include all or a portion of pit-derived material.

The important step of a preferred embodiment of the present invention is the comminution step, by which the particle size is reduced. This comminution step must be carried out under conditions whereby the temperature of the material is maintained at less than 10°C preferably lower than 0°C, optimally below -10°C. This temperature is below the softening range of oils in the mixture. This is important where the content of oil in the material being comminuted is more than about 0.5% for instance in the range 5 to 15% based on the weight of material being comminuted. By keeping the temperature at this low level, the material remains workable in the comminution apparatus. Generally the apparatus is cooled by the use of liquid nitrogen. The comminution is thus carried out in apparatus which is adapted to allow suitable cooling, and to provide particles of the desired size. Suitable mills are pin mills, ball mills, cryogenic mills and micron mills.

Milling conditions should otherwise be selected according to the end results required. It is usual to provide product separating means, whereby particulates which have not been ground sufficiently small are returned to the comminution step, whilst material which has been ground sufficiently small is passed to the next steps of the process.

The comminution step is carried out so as to achieve a particle size for the powder product whereby at least 99% by weight has particle size less than 0.4mm, preferably less than 0.3mm, more preferably less than 0.2mm, for instance less than 0.1mm or even less than 75µm. Particle sizes of less than 50µm will generally have a good mouth feel when incorporated into comestible products.

After the comminution step, it is preferred for the product to be stored under conditions in which it is protected from moisture and/or atmospheric oxygen, as well as high temperatures and light. The powder is convenient for many subsequent applications. It is capable of being handled by normal powder handling apparatus. It may be formulated into comestible compositions, especially human food products, in which it may be admixed with other components as desired.

The invention is further illustrated in the accompany examples:

### Example 1

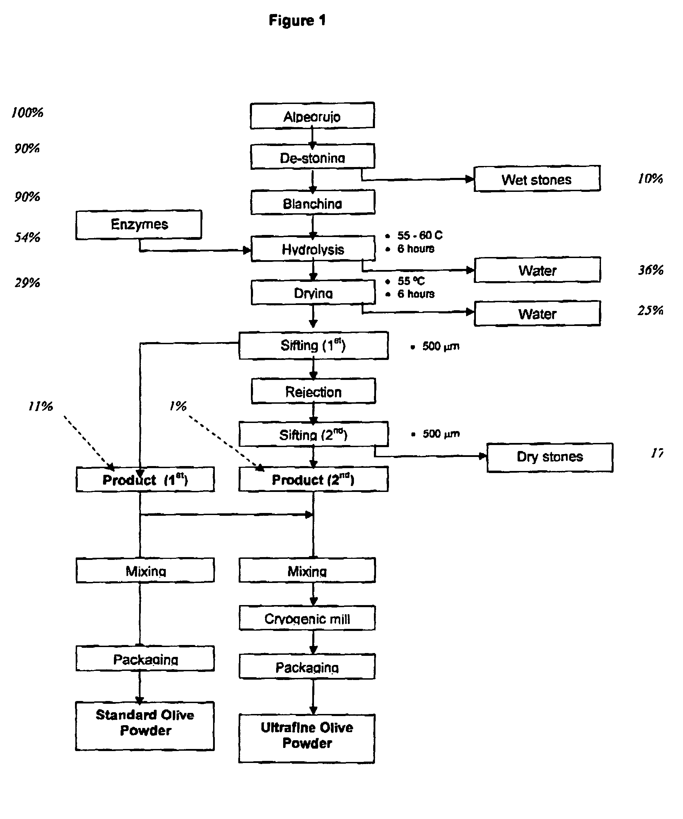

A commercial process is illustrated schematically in the flow diagram of Figure 1.

In the flow diagram, the figures to the left hand side of the figure refer to the percentage by weight of the starting alpeorujo remaining following the specified step. On the right of the flow diagram figures are given for the percentage by weight removed during the respective step.

In this process, alpeorujo paste is destoned using a commercially available machine using sieves with 2mm openings, to separate wet stones from paste. The wet stones constitute around 10% by weight of the starting alpeorujo. The product paste is weighed into a bioreactor in which several sequential steps are carried out. First the temperature is raised to 60° and held for 15 minutes. This blanching inactivates PPO. It also reduces the microbial count. Second step is the hydrolysis of oleuropein, in which the temperature is lowered 55°C for a period of around 30 minutes or less. The paste is supplemented by spraying with a suspension in water (1-5) of enzyme at a rate of 500g enzyme (Maxoliva) per ton of paste starting material. As an alternative, chemical hydrolysis may be carried out by addition of citric acid until a pH of 3 is reached, the temperature being held at 55°C for a suitable period of time. The third step is the drying step. This may be commenced before the hydrolysis is complete. Drying is preferably carried out at a temperature of around 55°C by reducing the pressure. Together, during the hydrolysis and drying steps, around 61% of the original weight is lost as water.

After drying, the product is sifted. Material retained on the sieve is subjected to a second sieving step. Both sieves have an aperture size of 500 µm. The material passing through the first sieve, weighing around 11 % by weight of the starting alpeorujo, is combined with the material passing through the second sieve. Subsequent steps depend upon whether the material is to be used to form standard olive powder, in which case no further particle reduction steps take place, or ultra-fine olive powder. For the ultra-fine olive powder, the solids from the sieving steps must be subjected to milling. In this process, the material is cooled in a cryogenic mill, is then browned to the desired particle size distribution, and is then packaged for use.

The dry stones removed in the second sifting are used, for instance, as fuel for generating power. Similarly, the wet stones removed in the paste sieving step may be dried and used as fuel.

### Example 2

### Defatted Olive Powder without pits from olive paste

The olive has the following composition in average: water 50%, oil 22%, carbohydrates 19.10%, fiber 5.80%, proteins 1.60% and ash 1.5%. 1000 kg of olives are blanched at 65°C for 15 min to inactivate PPO, then cooked and dried in vacuum 55 °C and 10 mmHg (1.3 kPa), separating 300 kg of water, obtaining 700 kg of semi-dry olive. Then the semi-dry olive is defatted by expeller, obtaining 110 kg of oil and 590 kg of "semi-dry and semi-defatted" olive paste. The remnant oil from the "semi-dry and semi-defatted" olive paste is extracted with hexane, 450 kg of "semi-dry and defatted" olive paste are obtained and 140 kg of oil. The remaining water from the "semi-dry and defatted" olive paste is extracted in vacuum dryer at 55°C and 10 mm Hg (1.3 kPa). The drying takes place simultaneously in two Guedu driers of 500 kg capacity each, with 12 h for each batch, the energy consumption being about 1 kw/kg wet paste. 290 kg of "dry and defatted" olive paste are obtained and 190 kg of water. The 290 kg of "dry and defatted" olive paste are sifted separating the particles higher than 0.500 mm in size, 114 kg of large particles including pits are separated and to recover 76 kg of dry flesh. The 76 kg of dry flesh is milled in a pin mill with a cryogenic system at a temperature maintained at less than -10°C by the use of liquid nitrogen as coolant reducing the size of 99% of the particles below 0.075 mm. Finally, the "Defatted Olive Powder" without pits from olive paste is packaged.

### Example 3

### Olive powder without pits from alpeorujo

The alpeorujo from green olives has the following composition in average: water 60.68%, oil 5.34%, carbohydrates 23.18%, fibre 7.04%, proteins 1.94% and ash 1.82%. 1000 kg of alpeorujo are pretreated to avoid microbial deterioration by adding 80 kg of ethanol, to obtain 1080 kg of stabilised alpeorujo. The 1080 kg of stabilised alpeorujo are blanched at 65°C for 15 min to inactivate PPO. To the blanched paste thermostable B-glucosidase is added to hydrolyse oleuropein for 3h at 60°C. Immediately after hydrolysis the paste is dried at 55 °C and 10 mm Hg (1.3 kPa) in fire. Guedu dries as described in and with approximately the same energy usage as Example 1 400 kg of dry alpeorujo and 680 kg of condensate are recovered. The 400 kg of dry alpeorujo are sifted separating the particles higher than 0.500 mm in size. 240 kg of pits are separated and 160 kg of dry flesh is obtained. The 160 kg of dry flesh are milled in a pin mill with a cryogenic cooling system at a temperature less than -10°C reducing the size of 99% of the particles below 0.075 mm. Finally, the olive powder without the pits from alpeorujo is packaged.

### Example 4

### Olive Powder with pits from orujo

The orujo from black olives has the following composition in average: water 25%, oil 10.2%, carbohydrates 44.2%, fibre 13.5%, proteins 3.7% and ashes 3.47%. 1000 kg of orujo is pretreated adding 80 kg of ethanol, to obtain 1080 kg of prepared orujo (as in example 2). The 1080 kg of prepared orujo is dried at 55 °C and 10 mm Hg (1.3 kPa), obtaining 775 kg of dry orujo and 305 kg of condensate. The drying is conducted in five Guedu driers, for 8h per batch and at an energy consumption of about 0.7 kW/kg wet orujo. The 775 kg of dry orujo are milled in a Micron mill with a cryogenic cooling system at <-10°C reducing the size of 99% of the particles below 0.075 mm. Finally, the olive powder with the pits from orujo is packaged.

## Claims

1. A process for producing olive powder
subjecting olive starting material to a polyphenol oxidase inactivation step;
providing an olive paste comprising said olive material which has an oil content of no more than 20% by weight and a water content less than 20% by weight based on non-volatiles and
drying the olive paste to remove water and provide a particulate intermediate
optionally dry comminuting the particulate intermediate having a water content of less than 20% by weight in a mill whilst the temperature of the material in the mill is maintained at a temperature less than 10°C to form a powder of which at least 99% by weight has a particle size less than 0.55mm.

2. A process according to claim 1 in which the particulate intermediate used as the starting material for the comminution step has an oil content in the range 0.1 to 10% by weight.

3. A process according to claim 1 or claim 2 in which the olive paste is orujo or alpeorujo.

4. A process according to claim 1 or claim 2 in which the olive paste is formed in a series of preliminary steps in which
olive fruit is optionally cooked by heating at a temperature in the range 40 to 250°C for a period in the range 5 to 180 minutes;
the optionally cooked fruit is dried by evaporation of water to reduce the weight by an amount in the range 10 to 40% the starting weight of optionally cooked fruit;
the dried fruit is subjected to an oil removal step in which olive oil is removed from the dried fruit to produce the olive paste.

5. A process according to claim 4 in which the oil removal step is carried out in a press.

6. A process according to any of claims 1 to 5 in which the olive paste comprises pits and in which the pits are removed from the particulate intermediate prior to the comminution step, preferably by sifting out particles with size greater than 0.5 mm.

7. A process according to any of claims 1 to 6 comprising an oil removal step whereby oil present in the olive paste is removed and the product powder has an oil content of less than 0.5% by weight.

8. A process according to claim 7 in which the oil removal step is carried out before the olive paste is dried.

9. A process according to claim 7 in which the oil removal step is carried out between the drying and comminution steps.

10. A process according to claim 7 in which the oil removal step is carried out after the comminution step.

11. A process according to any of claims 1 to 10 in which the olive paste is dried whilst heating to a temperature maintained at less than 60°C.

12. A process according to any of claims 1 to 11 in which the aqueous olive paste is treated before the drying step to minimise oxidation by polyphenol oxidase.

13. A process according to claim 12 in which oxidation is minimised by
a) excluding oxygen from contacting the paste;
b) reducing the pH of the paste;
c) adding reducing agent to the paste; and/or
d) deactivating the PPO enzyme.

14. A process according to claim in which enzyme deactivation is carried out by heating the paste at a temperature in the range 55 to 80°C whilst the moisture content of the paste is at least 65% by weight for a period in the range 5 to 20 minutes.

15. A process according to any of claims 1 to 14 in which the aqueous olive paste is treated before the drying step to hydrolyse oleuropein present in the paste.

16. A process according to claim 15 in which oleuropein is hydrolysed by contacting the paste with enzymes, preferably selected from glycosidases, lipases and mixtures thereof.

17. A process according to claim 15 in which oleuropein is hydrolysed by acid or alkaline hydrolysis.

18. A process according to any of claims 1 to 17 in which the dry comminution is carried out whilst the temperature of the material in the mill is less than 70°C.

19. A process according to claim 18 in which the mill has a cryogenic cooling system using liquid nitrogen as coolant.

20. A process according to any of claims 1 to 19 in which the particulate intermediate starting material for the comminution step has a moisture content less than 10% by weight.

## Patentansprüche

1. Essbares Olivenpulver, von dem wenigstens 99 Gew.-% eine Partikelgröße von weniger als 0,65 mm haben und das einen Ölgehalt von weniger als 20 Gew.-% bezogen auf das Pulver besitzt.

2. Olivenpulver nach Anspruch 1, von dem wenigstens 99 Gew.-% eine Partikelgröße von weniger als 0,55 mm, vorzugsweise von weniger als 0,3 mm, in bevorzugterer Weise von weniger als 0,2 mm, in bevorzugtester Weise von weniger als 0,1 mm, insbesondere von weniger als 0,075 mm haben.

3. Olivenpulver nach Anspruch 1 oder Anspruch 2, das einen Feuchtigkeitsgehalt von weniger als 20 Gew.-%, vorzugsweise von weniger als 10 Gew.-%, in bevorzugterer Weise von weniger als 5 Gew.-%, in bevorzugtester Weise von weniger als 3 Gew.-% besitzt.

4. Olivenpulver nach einem der vorherigen Ansprüche, das im Wesentlichen frei von Materialien ist, die von den Olivenkernen stammen.

5. Olivenpulver nach einem der vorherigen Ansprüche, das einen Ölgehalt von weniger als 10 Gew.-%, vorzugsweise von weniger als 0,5 Gew.-% besitzt.

6. Ein für Menschen essbares Produkt, das ein Pulver nach einem der vorherigen Ansprüche und wenigstens einen anderen essbaren Bestandteil umfasst.

7. Ein Verfahren zur Herstellung von Olivenpulver, der Olivenausgangsmaterial einem Schritt zur Inaktivierung der Polyphenol-Oxidase aussetzt; wobei eine Olivenpaste zur Verfügung gestellt wird, die das besagte Olivenmaterial umfasst, das einen Ölgehalt von nicht mehr als 20 Gew.-% und einen Wassergehalt von weniger als 20 Gew.-% bezogen auf nicht-verdampfbare Stoffe besitzt, und wobei die Olivenpaste getrocknet wird, um Wasser zu entfernen und ein wahlweise trockenes Partikel-Zwischenprodukt zur Verfügung zu stellen, wobei das Partikel-Zwischenprodukt mit einem Wassergehalt von weniger als 20 Gew,-% in einer Mühle pulverisiert wird, während die Temperatur des Materials in der Mühle bei einer Temperatur aufrechterhalten wird, die unter der liegt, um ein Pulver zu bilden, von dem wenigstens 99 Gew.-% eine Partikelgröße von weniger als 0,55 mm besitzen.

8. Ein Verfahren nach Anspruch 7, bei dem das Partikel-Zwischenprodukt, das als Ausgangsmaterial für den Pulverisierungs-Schritt verwendet wird, einen Ölgehalt im Bereich von 0,1 bis 10 Gew.-% besitzt.

9. Ein Verfahren nach Anspruch 7 oder Anspruch 8, bei dem es sich bei der Olivenpaste um Trester (orujo) oder besondere Art des Tresters (alpeorujo) handelt.

10. Ein Verfahren nach Anspruch 7 oder Anspruch 8, bei dem die Olivenpaste in einer Reihe von vorausgehenden Schritten gebildet wird, bei dem die Olivenfrucht wahlweise gekocht wird, indem diese bei einer Temperatur im Bereich von bis 40 für einen Zeitraum von 5 bis 180 Minuten erhitzt wird; bei dem die wahlweise gekochte Frucht getrocknet wird, indem Wasser verdampft wird, um das Gewicht um einen Wert im Bereich von 10 bis 40% des Ausgangsgewichts der wahlweise gekochten Frucht zu reduzieren; bei dem die getrocknete Frucht einem Öl-Entfernungs-Schritt ausgesetzt wird, bei dem Olivenöl aus der getrockneten Frucht entfernt wird, um die Olivenpaste herzustellen.

11. Ein Verfahren nach Anspruch 10, bei dem der Öl-Entfernungs-Schritt in einer Presse durchgeführt wird.

12. Ein Verfahren nach einem der Ansprüche 7 bis 11, bei dem die Olivenpaste Kerne enthält und bei dem die Kerne vor dem Pulverisierungs-Schritt aus dem Partikel-Zwischenprodukt entfernt werden, vorzugsweise indem Partikel mit einer Größe über 0,5 mm herausgeschöpft werden.

13. Ein Verfahren nach einem der Ansprüche 7 bis 12, der einen Öl-Entfernungs-Schritt umfasst, bei dem das in der Olivenpaste vorhandene Öl entfernt wird und das Pulverprodukt einen Ölgehalt von weniger als 0,5 Gew.-% besitzt.

14. Ein Verfahren nach Anspruch 13, bei dem der Öl-Entfernungs-Schritt durchgeführt wird, bevor die Olivenpaste getrocknet wird.

15. Ein Verfahren nach Anspruch 13, bei dem der Öl-Entfernungs-Schritt zwischen dem Trocken- und den Pulverisierungs-Schritt durchgeführt wird.

16. Ein Verfahren nach Anspruch 13, bei dem der Öl-Entfernungs-Schritt nach dem Pulverisierungs-Schritt durchgeführt wird.

17. Ein Verfahren nach einem der Ansprüche 7 bis 16, bei dem die Olivenpaste getrocknet wird, während diese bei einer Temperatur von weniger als erhitzt wird.

18. Ein Verfahren nach einem der Ansprüche 7 bis 17, bei dem die wasserhaltige Olivenpaste vor dem Trocken-Schritt behandelt wird, um eine Oxidation durch Polyphenol-Oxidase zu minimieren.

19. Ein Verfahren nach Anspruch 18, bei dem die Oxidation minimiert wird, indem a) der Sauerstoff daran gehindert wird, in Kontakt mit der Paste zu treten; b) der pH-Wert der Paste reduziert wird; c) der Paste ein Reduzierungsmittel zugefügt wird; und/oder d) das PPO-Enzym deaktiviert wird.

20. Ein Verfahren nach Anspruch 19, bei dem die Enzym-Deaktivierung durchgeführt wird, indem die Paste bei einer Temperatur im Bereich von bis 55 erhitzt wird, während der Feuchtigkeitsgehalt der Paste wenigstens 65 Gew.-% für einen Zeitraum von 5 bis 20 Minuten beträgt.

21. Ein Verfahren nach einem der Ansprüche 7 bis 20, bei dem die wasserhaltige Olivenpaste vor dem Trocken-Schritt behandelt wird, um das in der Paste enthaltene Oleuropein zu hydrolysieren.

22. Ein Verfahren nach Anspruch 21, bei dem das Oleuropein hydrolysiert wird, indem die Paste mit Enzymen in Kontakt gebracht wird, vorzugsweise Esterase-Enzyme, in bevorzugtester Weise Glykosidase.

23. Ein Verfahren nach Anspruch 21, bei dem das Oleuropein durch Säure- oder alkalische Hydrolyse hydrolysiert wird.

24. Ein Verfahren nach einem der Ansprüche 7 bis 23, bei dem die trockene Pulverisierung durchgeführt wird, während die Temperatur des Materials in der Mühle geringer als ist.

25. Ein Verfahren nach Anspruch 24, bei dem die Mühle über ein cyrogenisches Kühlsystem verfügt, das flüssigen Stickstoff als Kühlmittel verwendet.

26. Ein Verfahren nach einem der Ansprüche 7 bis 25, bei dem das Partikel-Zwischenprodukt-Ausgangsmaterial für den Pulverisierungs-Schritt einen Feuchtigkeitsgehalt von weniger als 10 Gew.-% besitzt.

## Revendications

1. Poudre d'olive comestible dont au moins 99% en poids est constitué de particules dont la taille est inférieure à 0,65 mm et dont la teneur en huile est inférieure à 20% du poids de la poudre.

2. Poudre d'olive selon la revendication 1 dont au moins 99% en poids est constitué de particules dont la taille est inférieure à 0,55 mm, de préférence inférieure à 0,3 mm, de préférence encore inférieure à 0,2 mm, ce qui est préférable entre tout inférieure à 0,1 mm, en particulier inférieure à 0,075 mm.

3. Poudre d'olive selon la revendication 1 ou la revendication 2 dont la teneur en eau est inférieure à 20% en poids, de préférence inférieure à 10% en poids, de préférence encore inférieure à 5%, ce qui est préférable entre tout inférieure à 3% en poids.

4. Poudre d'olive selon quelconque des revendications précédentes substantiellement débarrassée de matière provenant des noyaux d'olives.

5. Poudre d'olive selon quelconque des revendications précédentes dont la teneur en huile est inférieure à 10% en poids, de préférence inférieure à 0,5% en poids.

6. Un produit destiné à la consommation humaine comprenant une poudre selon quelconque des revendications précédentes et au moins un autre ingrédient comestible.

7. Un procédé pour produire de la poudre d'olive en soumettant la matière de départ qu'est l'olive à une phase d'inactivation de la polyphénol oxydase ; en fournissant une pâte d'olive constituée de ladite matière de départ qu'est l'olive dont la teneur en huile n'est pas supérieure à 20% en poids et dont la teneur en eau est inférieure à 20% en poids basé sur les non volatils et en séchant la pâte d'olive pour évacuer l'eau et produire un intermédiaire à particules optionnellement sec en broyant l'intermédiaire à particules ayant une teneur en eau inférieure à 20% en poids dans un moulin tandis que la température de la matière dans le moulin est maintenue à une température inférieure à pour former une poudre dont 99% au moins en poids présente une dimension de particules inférieure à 0,55 mm.

8. Un procédé selon la revendication 7 dans lequel l'intermédiaire à particules utilisé en tant que matière de départ pour la phase de broyage a une teneur en huile allant de 0,1 à 10% en poids.

9. Un procédé selon la revendication 7 ou la revendication 8 dans lequel la pâte d'olives est du marc d'olives (orujo) ou un mélange de marc d'olives et de liquide résiduel du broyage des olives (alpeorujo).

10. Un procédé selon la revendication 7 ou la revendication 8 dans lequel la pâte d'olives est produite au cours d'une série de phases préliminaires durant lesquelles les olives sont optionnellement cuites par chauffage à une température allant de 40 à pendant une durée de 5 à 180 minutes ; le fruit optionnellement cuit est séché par évaporation de l'eau afin de réduire le poids dans une proportion allant de 10 à 40% du poids de départ du fruit optionnellement cuit ; le fruit séché est soumis à une phase d'extraction de l'huile au cours de laquelle l'huile d'olive est évacuée du fruit séché afin de produire la pâte d'olives.

11. Un procédé selon la revendication 10 dans lequel la phase d'extraction de l'huile est réalisée dans un pressoir.

12. Un procédé selon quelconque des revendications 7 à 11 dans lequel la pâte d'olives comprend des noyaux et dans lequel les noyaux sont évacués de l'intermédiaire à particules avant la phase de broyage, de préférence par sassage des particules dont la taille est supérieure à 0,5 mm.

13. Un procédé selon quelconque des revendications 7 à 12 comportant une phase d'extraction de l'huile où l'huile présente dans la pâte d'olives est évacuée et où le produit pulvérisé a une teneur en huile inférieure à 0,5% en poids.

14. Un procédé selon la revendication 13 dans lequel la phase d'extraction de l'huile est réalisée avant que la pâte d'olives ne soit sèche.

15. Un procédé selon la revendication 13 dans lequel la phase d'extraction de l'huile est réalisée entre les phases de séchage et de broyage.

16. Un procédé selon la revendication 13 dans lequel la phase d'extraction de l'huile est réalisée après la phase de broyage.

17. Un procédé selon quelconque des revendications 7 à 16 dans lequel la pâte d'olives est séchée par chauffage à une température maintenue à moins de

18. Un procédé selon quelconque des revendications 7 à 17 dans lequel la pâte d'olives aqueuse est traitée avant la phase de séchage pour minimiser l'oxydation par polyphénol oxydase.

19. Un procédé selon la revendication 18 dans lequel l'oxydation est minimisée par le fait a) qu'on empêche l'oxygène d'être en contact avec la pâte ; b) qu'on réduit le pH de la pâte ; c) qu'on ajoute un agent réducteur à la pâte ; et/ou d) qu'on désactive l'enzyme PPO.

20. Un procédé selon la revendication 19 dans lequel la désactivation des enzymes est réalisée par chauffage de la pâte à une température allant de 55 à tandis que la teneur en eau de la pâte est au moins de 65% en poids pendant une durée allant de 5 à 20 minutes.

21. Un procédé selon quelconque des revendications 7 à 20 dans lequel la pâte d'olives aqueuse est traitée avant la phase de séchage pour hydrolyser l'oleuropéine présente dans la pâte.

22. Un procédé selon la revendication 21 dans lequel l'oleuropéine est hydrolysée par le contact de la pâte avec les enzymes, de préférence l'enzyme estérase, de préférence encore la glycosidase.

23. Un procédé selon la revendication 21 dans lequel l'oleuropéine est hydrolysée par hydrolyse acide ou alcaline.

24. Un procédé selon quelconque des revendications 7 à 23 dans lequel le broyage à sec est réalisé pendant que la température de la matière dans le moulin est inférieure à

25. Un procédé selon la revendication 24 dans lequel le moulin possède un système de cryorefroidissement utilisant de l'azote liquide comme agent de refroidissement.

26. Un procédé selon quelconque des revendications 7 à 25 dans lequel la matière de départ intermédiaire à particules pour la phase de broyage a une teneur en eau inférieure à 10% en poids.
